# Europäisches Patentamt

# European Patent Office

# Office européen des brevets

(11) Veröffentlichungsnummer: **0 243 879**
**B1**

(12) **EUROPÄISCHE PATENTSCHRIFT**

(45) Veröffentlichungstag der Patentschrift:
**27.12.89**

(51) Int. Cl.⁴: **G06F 9/38**

(21) Anmeldenummer: **87105951.5**

(22) Anmeldetag: **23.04.87**

(54) Verfahren und Anordnung zur Beschleunigung der Bereitstellung eines Befehles im Befehlsregister eines mikroprogrammgesteuerten Prozessors.

(30) Priorität: **23.04.86 DE 3613718**

(43) Veröffentlichungstag der Anmeldung:
**04.11.87 Patentblatt 87/45**

(45) Bekanntmachung des Hinweises auf die Patenterteilung:
**27.12.89 Patentblatt 89/52**

(84) Benannte Vertragsstaaten:
**AT BE CH DE FR GB IT LI NL SE**

(56) Entgegenhaltungen:
**EP-A- 0 123 922**

**IBM TECHNICAL DISCLOSURE BULLETIN, Band 24, Nr. 11B, April 1982, Seiten 6109-6111, New York, US; K.J. GETZLAFF et al.: "Instruction buffer addressing"**
**IBM TECHNICAL DISCLOSURE BULLETIN, Band 24, Nr. 3, August 1981, Seiten 1401-1403, New York, US; F.T. BLOUNT et al.: "Shared instruction buffer for multiple instruction streams"**

(73) Patentinhaber: **Siemens Aktiengesellschaft, Wittelsbacherplatz 2, D-8000 München 2(DE)**

(72) Erfinder: **Anthony, Rolf, Gerhard-Hauptmann-Ring 11, D-8000 München 83(DE)**

## Beschreibung

Die Erfindung betrifft ein Verfahren und eine Anordnung zur Beschleunigung der Bereitstellung eines Befehles im Befehlsregister eines mikroprogrammgesteuerten Prozessors.

Die Leistungsfähigkeit moderner Rechner wird in erster Linie durch die je Zeiteinheit bearbeitbaren Befehle bestimmt. Unabhängig von der Arbeitsgeschwindigkeit der Schaltkreise und Schaltkreiskomponenten kann die Arbeitsgeschwindigkeit eines Rechners vor allem durch strukturelle Maßnahmen gesteigert werden. Derartige strukturelle Maßnahmen bestehen u.a. im Einsatz eines schnellen Pufferspeichers zwischen Arbeitsspeicher bzw. Zentralspeicher und Prozessor sowie in einem Befehlspuffer, der vorausschauend nachfolgende Befehle eines Programms aus dem Pufferspeicher aufnimmt und das Befehlsregister nacheinander mit den Befehlen speist - man siehe z.B. "Elektronische Rechenanlagen", 1973, Heft 2, Seiten 60 bis 65.

Die Speicherung der Befehle erfolgt dabei unabhängig von der Länge der einzelnen Befehle, die z.B. 16,32 oder 48 Bits umfassen können, fortlaufend auf Dateneinheiten von konstanter Länge, z.B. 64 Bits entsprechend einem Doppelwort mit 8 Bytes, verteilt, so daß der Beginn eines Befehles meistens nicht mit einer Doppelwortgrenze und damit mit dem Beginn einer Dateneinheit zusammenfällt. Zur Auswahl eines Befehles aus den im Befehlspuffer gespeicherten Dateneinheiten sind daher gesonderte Auswahlschalter erforderlich, die den jeweiligen Befehl immer linksbündig ausgerichtet an das Befehlsregister weiterleiten - man siehe z.B. "Computer", Vol. 7, No. 11 (Nov. 1974), Seiten 24 bis 38.

Dabei werden in der Regel jeweils mehrere Dateneinheiten im voraus im Befehlspuffer bereitgestellt und der Befehlspuffer doppelt vorgesehen, damit bei möglichen Programmverzweigungen infolge erfüllter Sprungbefehle auch die ersten Befehle für die Verzweigungsrichtung im voraus bereitgestellt werden können.

Der Weg über den Befehlspuffer zum Befehlsregister bedeutet aber immer dann eine Verzögerung von einem Elementarzyklus des Prozessors, wenn bei erfüllten Sprungbefehlen die Sprungentscheidung bereits vor dem Transfer vom Pufferspeicher in den Befehlspuffer vorliegt oder aus irgendeinem Grunde der Befehlspuffer neu geladen werden muß. Es ist daher Aufgabe der Erfindung, die Bereitstellung der Befehle im Befehlsregister so zu steuern, daß keine unnötigen Wartezeiten für die Befehlsdecodierung entstehen und unnötige Warte-Elementarzyklen vermieden werden.

Diese Aufgabe wird bezüglich des Verfahrens gemäß der Erfindung durch die Merkmale des Patentanspruches 1 gelöst.

Danach wird der jeweils erste Befehl einer aus dem Pufferspeicher zu übernehmenden neuen Befehlsfolge vom Pufferspeicher bereits linksbündig ausgerichtet in Form einer ausgerichteten Dateneinheit geliefert, so daß diese unmittelbar dem Befehlsregister zugeleitet werden kann. Gleichzeitig wird die ausgerichtete Dateneinheit über einen Rückausrichter dem ersten Register des Befehlspuffers zugeleitet, so daß die in diesem abgespeicherte Da teneinheit der unausgerichteten Form im Pufferspeicher wieder entspricht und sich die nachfolgend an den Pufferspeicher übergebenden unausgerichteten Dateneinheiten von ihrer Adresse her nahtlos an die erste Dateneinheit anschließen. Unmittelbar an die Übertragung des ersten Befehls in das Befehlsregister kann daher im selben Elementarzyklus bereits mit der Interpretation des Befehles begonnen werden.

Aus der britischen Patentschrift 11 56 249 ist es bereits bekannt, die jeweils erste Dateneinheit aus dem Pufferspeicher gleichzeitig sowohl dem Befehlspuffer als auch einem gesonderten Register zuzuführen. Diesem Register ist ein Auswahlschalter nachgeschaltet, der durch die entsprechenden niederwertigsten Adressenbits des Befehles auf die jeweils ersten, an einer der Halbwortgrenze beginnenden 8 Bits für den Operationscode eines Befehles einstellbar ist, so daß ein nachgeschalteter Operationscode-Decoder sofort mit der Befehlsauswertung beginnen kann.

Da aber die Befehlslänge verschieden sein kann und ein Befehl an jeder Halbwortgrenze beginnen kann, steht der gesamte Befehl vielfach nicht sofort zur Verfügung, so daß eine vollständige Interpretation erst nach Auffüllung des gesonderten Registers möglich ist. Das kostet wiederum Zeit und erfordert zusätzlichen Aufwand für die Nachfüllsteuerung, da jeder Halbwortbereich des Registers für jedes Halbwort der nachfolgenden Dateneinheit gesondert auswählbar sein muß.

Die mit dem neuen Verfahren erzielbare Zeitersparnis kommt vor allem dann voll zum Tragen, wenn mit einer Dateneinheit wenigstens zwei Befehle der größten Länge, also mindestens 1,5 Doppelworte, erfaßt werden, damit der Folgebefehl jeweils rechtzeitig vom Befehlspuffer zur Verfügung gestellt werden kann. Kürzere Dateneinheiten, von z.B. einem Doppelwort lassen sich dagegen dann verwenden, wenn gemäß einer Weiterbildung entsprechend Anspruch 2 während eines Elementarzyklusses jeweils zwei Dateneinheiten vom Pufferspeicher mit zeitlichem Abstand voneinander für die Übernahme in den Befehlspuffer bereitgestellt werden.

Eine Anordnung gemäß der Erfindung ergibt sich aus den Merkmalen des Patentanspruches 3. Ausgangspunkt ist dabei ein Pufferspeicher, bei dem immer zwei aufeinanderfolgende Dateneinheiten gleichzeitig gelesen werden können, aus denen dann eine mit dem gewünschten Befehl linksbündig ausgerichtet beginnende Dateneinheit gebildet wird, so daß das Befehlsregister direkt angesteuert werden kann. Um dennoch die Arbeitsweise des Befehlspuffers in der herkömmlichen Weise aufrechtzuerhalten, wird diese ausgerichtete Dateneinheit parallel dazu dem Befehlspuffer über einen zweiten Auswahlschalter als Rückausrichter zugeführt. Alle weiteren Dateneinheiten aus dem Pufferspeicher werden dann unverändert in der bisherigen Weise vom Pufferspeicher an den Befehlspuffer übergeben, so daß dieser eine Kopie jeweils einer Gruppe der im Pufferspeicher gespeicherten Dateneinheiten enthält, aus denen dann die Befehle nacheinander für das Befehlsregister ausgewählt werden.

In Folge der üblichen linearen Adressierung können für die Einstellung der Auswahlschalter einfach die entsprechenden niederwertigsten Adressenbits der jeweiligen Befehlsadressen genutzt werden, während die Festlegung der Wirkungszeitpunkte zweckmäßig durch die die Elementarzyklen bildenden Taktimpulse in Verbindung mit den auslösenden Lesebefehlen erfolgt. Entsprechende Weiterbildungen ergeben sich aus den Unteransprüchen.

Einzelheiten der Erfindung seien nachfolgend anhand eines in der Zeichnung dargestellten Ausführungsbeispieles erläutert. Im einzelnen zeigen

FIG 1 ein schematisches Blockschaltbild für eine Anordnung gemäß der Erfindung,
FIG 2 ein Datenstrukturschema zur Erläuterung der Arbeitsweise der Anordnung von FIG 1 und
FIG 3 Impulsdiagramme zur Erläuterung des zeitlichen Steuerungsablaufes gemäß der Erfindung.

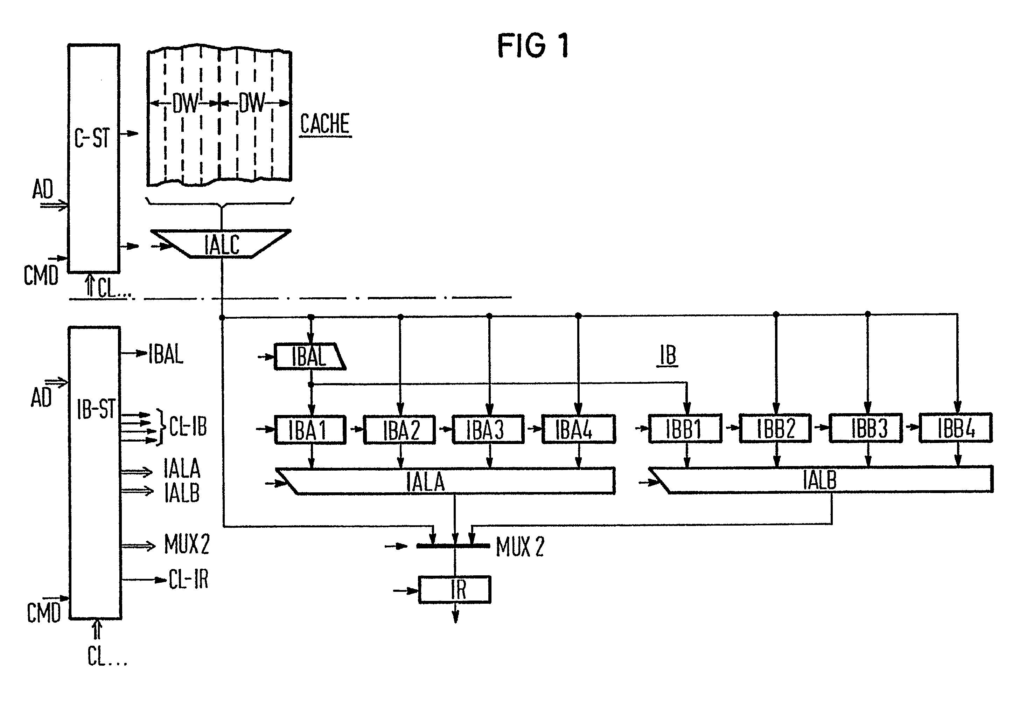

Das Blockschaltbild von FIG 1 zeigt im linken oberen Teil den Pufferspeicher CACHE mit seiner Steuerung C-ST und im unteren Teil den Befehlspuffer IB mit Steuerung IB-ST und nachgeschaltetem Befehlsregister IR.

Der Befehlspuffer IB besteht aus zwei Gruppen von Registern IBA1 bis IBA4 und IBB1 bis IBB4, von denen die zweite Gruppe in an sich bekannter Weise im Falle einer Programmverzweigung benutzt wird. Jede der beiden Registergruppen ist mit einem Auswahlschalter IALA bzw. IALB gekoppelt, der in an sich bekannter Weise abhängig von den entsprechenden niederwertigsten Bits der jeweiligen Befehlsadresse den zugehörigen Befehl aus den in den Registern gespeicherten Dateneinheiten auswählt.

Die Dateneinheiten entsprechen beispielsweise jeweils 64 Bits entsprechend einem Doppelwort DW, das jeweils in 4 Halbworte von je 16 Bits unterteilt ist, aus denen sich die einzelnen Befehle zusammensetzen. Die 4 Register jeder Gruppe können also insgesamt 4 Doppelworte aufnehmen, aus denen die benötigten Halbwortgruppen eines Befehles in zyklischer Folge auswählbar sind.

Ist der Befehlspuffer IB leer, werden alle 4 Doppelworte nacheinander aus dem Pufferspeicher CACHE gelesen und der Befehlspuffer IB gefüllt. Sind zwei Doppelworte DW im Rahmen der Befehlsverarbeitung ungültig geworden, werden die zugehörigen Register in zyklischen Folge nachgefüllt. Dieses selbsttätige vorauschauende Nachfüllen des Befehlspuffers IB wird in an sich bekannter Weise durch die zugehörige Steuerung IB-ST veranlaßt.

Die Speichereinheiten des Pufferspeichers CACHE haben eine Speicherbreite von zwei Doppelworten DW, und es werden immer zwei adressenmäßig aufeinanderfolgende Doppelworte DW gleichzeitig gelesen, auch wenn sie in verschiedenen Zeilen einer Speichereinheit abgespeichert sind. Dies ist in einfacher Weise durch Verwendung getrennter Speicherhälften mit der Breite von nur einem Doppelwort DW - wie dargestellt - möglich.

In Auswirkung der Erfindung ist dem Leseausgang des Pufferspeichers CACHE ein Auswahlschalter IALC nachgeschaltet, der aus den jeweils gelesenen beiden Doppelworten DW jeweils 4 aufeinanderfolgende und zusammen ein Doppelwort als Dateneinheit bildenden Halbworte auswählt, und zwar in der Weise, daß der jeweils gewünschte und durch die Leseadresse bestimmte Befehls linksbündig ausgerichtet in dieser Dateneinheit enthalten ist. Durch zeitgerechte Umsteuerung des Wegeschalters MUX2 am Eingang des Befehlsregisters IR kann also der erste Befehl einer neuen Befehlsfolge unter Umgehung des Befehlspuffers IB direkt dem Befehlsregister IR zugeführt werden.

Weiterhin ist dem Eingang der jeweils ersten Register IBA1 bzw. IBB1 ein weiterer Auswahlschalter IBAL vorgeschaltet, der als Rückausrichter arbeitet und die Wirkung des ersten Auswahlschalters am Ausgang des Pufferspeichers CACHE wieder rückgängig macht, so daß die in das erste Register des Pufferspeichers IB einzuspeichernde Dateneinheit der ursprünglich aus dem Pufferspeicher CACHE gelesenen Dateneinheit bezüglich der Lage der gültigen Bytes in vollem Umfange entspricht und die Adressenlinearität mit den nachfolgenden, unverändert in den Befehlspuffer IB übernommenen Dateneinheiten gewahrt bleibt.

Die Auswahlschalter können in an sich bekannter Weise aus einer Reihe von Multiplexern bestehen, die alle eingangsseitig mit allen auswählbaren Halbwortbereichen in zyklisch vertauschter Reihenfolge verbunden sind - man siehe z.B. DE-OS 31 38 897.

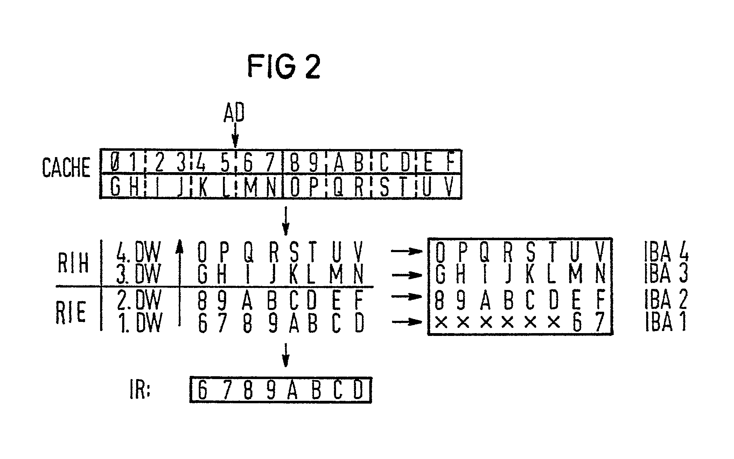

Damit ergibt sich entsprechend dem Datenstrukturschema von FIG 2 folgende Arbeitsweise:

Ausgehend von 2 Speicherzeilen im Pufferspeicher CACHE mit den Bytes 0 bis V, von denen jeweils 2 Bytes ein Halbwort bilden, wird abhängig von der Leseadresse AD, die beim gewählten Beispiel auf das Byte 6 als Befehlsanfang zeigt, das zugehörige Doppelwort mit den Bytes 0 bis 7 und das nachfolgende Doppelwort mit den Bytes 8 bis F gleichzeitig ausgelesen. Diese beiden Doppelworte könnten auch um eine Doppelwortbreite verschoben sein und in verschiedenen Speicherzeilen liegen.

Da die Doppelwortgrenze nicht mit dem Befehlsanfang übereinstimmt, wird bei einem den ersten Befehl einer Folge kennzeichnenden Lesebefehl, z.B. RIE, der Auswahlschalter IALC wirksam und aus den beiden gelesenen Doppelwörtern DW ein mit dem gewünschten Befehl beginnendes Doppelwort 1.DW als Dateneinheit ausgewählt und übertragen, das die Bytes 6 bis D umfaßt. Nachfolgend wird der Auswahlschalter IALC lediglich auf das zweite gelesene vollständige Doppelwort mit den Bytes 8 bis F eingestellt und dieses übertragen.

Während das Doppelwort 1.DW unverändert zum Befehlsregister IR gelangt, wird es zur Abspeicherung im Register IBA1 des Befehlspuffers IB wieder rückausgerichtet. Die Stellen der ursprünglichen, jetzt aber ungültigen Bytes 0 bis 5 werden dabei mit Nullen aufgefüllt, so daß die Bytes 6 und 7 wieder an ihre ursprüngliche Stelle rutschen. Das zweite übertragene Doppelwort 2.DW wird dagegen unverändert in das Register IBA2 übernommen. Zur weiteren Auffüllung des Befehlspuffers IB werden nachfolgend durch einen in diesem Fall selbsttätig ausgelösten weiteren Lesebefehl RIH zwei weitere nachfolgende Doppelwörter 3.DW und 4.DW mit den Bytes G bis N bzw. O bis V gelesen und in die Register IBA3 bzw. IBA4 übertragen. Analoges gilt für das weitere zyklische Nachfüllen inzwischen frei gewordener Register IBA.

Gleichzeitig mit der Füllung des ersten Registers IBA1 wird also auch das Befehlsregister IR mit dem ersten vollständigen Befehl geladen, so daß mit der Befehlsinterpretation des vollständigen Befehles sofort begonnen werden kann, ohne daß ein zusätzlicher Übertragungsvorgang vom ersten Register IBA1 des Befehlspuffers IB zum Befehlsregister IR erforderlich ist.

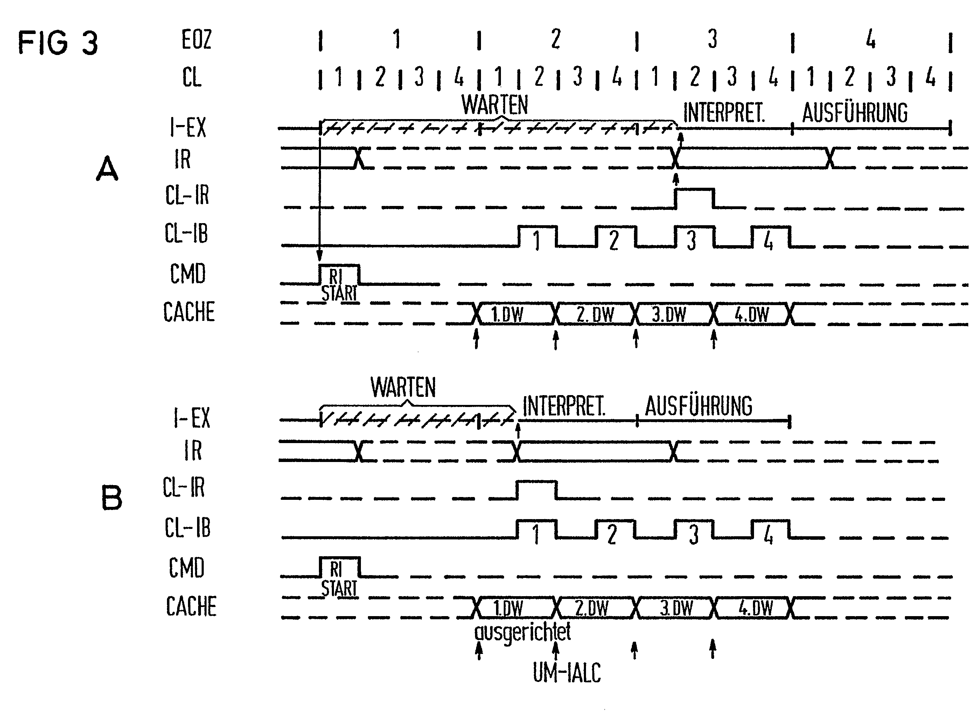

Die Impulsdiagramme von FIG 3 veranschaulichen den damit verbundenen Steuerungsablauf aus zeitlicher Sicht. In den beiden obersten Zeilen des Diagramms ist das durch die Elementarzyklen EOZ des Prozessors mit den zugehörigen Taktphasen CL1 bis CL4 vorgegebene Zeitraster dargestellt. Darunter folgen zwei Gruppen A und B von Diagrammzeilen, die den Ablauf einmal in herkömmlicher Weise mit Ansteuerung des Befehlsregisters IR allein über den Befehlspuffer IB zum anderen entsprechend der Erfindung wiedergeben.

Im dem Elementarzyklus EOZ1 vorangegangenen Elementarzyklus sei beispielsweise der Fall eingetreten, daß der Befehlspuffer IB zurückgesetzt geworden oder ein Sprungbefehl zur Ausführung gelangt ist, der einen Lesevorgang im Pufferspeicher CACHE zur Folge hat. Dies wird durch den als Lesebefehl RI bzw. RIE gekennzeichneten Steuerbefehl CMD angezeigt, der zu Beginn des Elementarzyklus EOZ1 gestartet wird. Dieser Befehl führt mit Beginn des nachfolgenden Zyklus EOZ2 zur Bereitstellung des ersten Doppelwortes 1.DW am Ausgang des Pufferspeichers CACHE, so daß es mit dem nachfolgenden Taktimpuls CL-IB1, der dem Taktimpuls CL2 im Zyklus EOZ2 entspricht, in den Befehlspuffer IB übertragen wird.

Unter der Voraussetzung, daß zur schnellen Füllung des Befehlspuffers IB in einem Elementarzyklus zwei Doppelwörter übertragen werden können, wird am Ausgang des Pufferspeichers CACHE mit Beginn des Taktimpulses CL3 das zweite Doppelwort 2.DW bereitgestellt und mit dem durch Taktimpuls CL4 ausgelösten Taktimpuls CL-IB2 in das Register IBA2 des Befehlspuffers IB übertragen. Erst im nachfolgenden Elementarzyklus EOZ3 kann daher mit dem durch den Taktimpuls CL2 ausgelösten Taktimpuls CL-IR der erste Befehl aus dem Befehlspuffer IB ins Befehlsregister IR übernommen und interpretiert werden. Vom Beginn des Elementarzyklus EOZ1 bis mindestens zum Beginn des Taktimpulses CL2 im Elementrazyklus EOZ3 muß also der Prozessor mit der Weiterbehandlung von Befehlen warten, was in der Zeile I-EX schraffiert angedeutet ist.

Wird dagegen entsprechend dem unteren Teil B des Diagrammes das vom Pufferspeicher CACHE bereitgestellte erste Doppelwort so zusammengestellt oder ausgerichtet, daß es bereits den gesamten ersten Befehl linksbündig ausgerichtet umfaßt, dann kann es durch den in diesem Fall gleichzeitig mit dem Taktimpuls CL-IB1 bereits ausgelösten Taktimpuls CL-IR direkt in das Befehlsregister IR übernommen und der erste Befehl bereits einen Elementarzyklus früher im Elementarzyklus EOZ2 interpretiert werden. Die Wartezeit für die Fortsetzung der Befehlsbehandlung verkürzt sich also jedesmal um die Dauer eines Elementarzyklusses.

Diese Zeiteinsparung ist dabei sowohl unabhängig von der übrigen Struktur des Prozessors - sie kommt also auch bei einer Pipeline-Struktur zum Tragen - als auch unabhängig von der Art der Sprungbefehle, sobald deren Sprungbedingung erfüllt und die Entscheidung darüber möglich ist, bevor die entsprechenden Befehle im Befehlspuffer bereitstehen.

## Patentansprüche

1. Verfahren zur Beschleunigung der Bereitstellung eines Befehls im Befehlsregister (IR) eines mikroprogrammgesteuerten Prozessors, bei dem wenigstens die die verschiedenen Befehle enthaltenden Dateneinheiten konstanter Länge aus einem Arbeitsspeicher blockweise einem Pufferspeicher (CACHE) und aus diesem dann gruppenweise entsprechend dem jeweiligen Programmfortschritt einem Befehlspuffer (IB) zugeführt werden, aus dem die Befehle dann einzeln nacheinander abgerufen und jeweils linksbündig ausgerichtet dem Befehlsregister (IR) zur Interpretation übergeben werden, **dadurch gekennzeichnet,**

– daß mit dem bei zurückgesetztem Befehlspuffer (IB) oder bei Programmverzweigungen in Folge eines Sprungbefehles mit erfüllter Sprungbedingung ausgelösten Lesebefehl (RI bzw. RIE) der jeweils erste neue Befehl unabhängig vom Beginn des Befehls innerhalb einer Dateneinheit vom Pufferspeicher (CACHE) aus linksbündig ausgerichtet als Dateneinheit direkt dem Befehlsregister (IR) zugeführt wird,

– daß gleichzeitig parallel dazu die vom Pufferspeicher (CACHE) gelieferte ausgerichtete Dateneinheit über einen Rückausrichter (IBAL) dem Befehlspuffer (IB) zugeführt wird, so daß im Befehlspuffer eine der Dateneinheit im Pufferspeicher (CACHE) bezüglich der Lage der gültigen Bytes entsprechende Dateneinheit abgespeichert wird, und

– daß anschließend die zur selben Gruppe gehörenden und auch die zum zyklischen Nachfüllen benötigten Dateneinheiten vom Pufferspeicher (CACHE) unverändert in den Befehlspuffer (IB) übertragen werden.

2. Verfahren nach Anspruch 1, **dadurch gekennzeichnet,** daß mit jedem Lesebefehl (RI, RIE bzw. RIH) des Prozessors an den Pufferspeicher (CACHE) jeweils zwei aufeinanderfolgende Dateneinheiten vom Pufferspeicher (CACHE) gleichzeitig bereitgestellt und innerhalb desselben Elementarzyklus (EOZ) mit zeitlichem Abstand nacheinander zum Befehlspuffer (IB) übertragen werden, wobei die notwendige Ausrichtung der jeweils ersten Dateneinheit abhängig von dem jeweiligen Lesebefehl (z.B. RIE) zu Beginn einer jeden neuen Befehlsfolge gesteuert wird.

3. Anordnung zur Beschleunigung der Bereitstellung eines Befehls im Befehlsregister (IR) eines mikroprogrammgesteuerten Prozessors, **gekennzeichnet durch**

- einen Pufferspeicher (CACHE) mit gleichzeitiger Auswahl zweier aufeinanderfolgender Dateneinheiten,
- einen ersten Auswahlschalter (IALC) am Leseausgang des Pufferspeichers (CACHE) zur adressenabhängigen Auswahl und linksbündigen Ausrichtung einer Folge von gleich großen Dateneinheitssektionen (z.B. Halbworte) im Umfang einer Dateneinheit (DW) aus den beiden gleichzeitig gelesenen Dateneinheiten,
- einen an den Ausgang des ersten Auswahlschalters (IALC) angeschlossenen direkten Übertragungsweg zum Befehlsregister (IR),
- einen zweiten Auswahlschalter (IBAL) am Eingang der jeweils die erste Dateneinheit einer Gruppe aufnehmenden Register (IBA1 bzw. IBB1) eines Befehlspuffers (IB) zur Rückausrichtung der jeweils am ersten Auswahlschalter (IALC) bereitgestellten ausgerichteten Dateneinheit,
- durch einen mit den Ausgängen aller für eine Befehlsfolge benutzten Register (z.B. IBA1 bis IBA4) des Befehlspuffers (IB) verbundenen Auswahlschalter (z.B. IALA) zur Auswahl des jeweils nächsten Befehles für das Befehlsregister (IR) und
- Steuereinrichtungen (C-ST bzw. IB-ST) zur Erzeugung der einzelnen Steuerimpulse für die zeitgerechte Umschaltung der Auswahlschalter und der Übertragungswege.

4. Anordnung nach Anspruch 3, **dadurch gekennzeichnet,** daß die Steuereinrichtungen (C-ST bzw. IB-ST) Einrichtungen zur Auswertung der maßgeblichen Lesebefehle (RI, RIE bzw. RIH) aufweisen, die mit Einrichtungen zur Ableitung der Übernahmeimpulse (CL-IB bzw. CL-IR) für die einzelnen Befehlspufferregister (z.B. IBA1 bis IBA4) und für das Befehlsregister (IR) abhängig von den die Elementarzyklen (EOZ) bildenden Taktimpulsen (z.B. CL1 bis CL4) und mit Einrichtungen zur zeitgerechten Ableitung der Einstellinformationen für die ersten beiden Auswahlschalter (IALC und IBAL) abhängig von den maßgeblichen Adressenbits der Befehlsadresse (AD) in Verbindung mit den Taktimpulsen (CL1 bis Cl4) gekoppelt sind.

5. Anordnung nach Anspruch 4, **dadurch gekennzeichnet,** daß die Einrichtungen zur zeitgerechten Ableitung der Einstellinformationen für den ersten Auswahlschalter (IALC) Einrichtungen zur Änderung der maßgeblichen Adressenbits zwecks Weiterleitung unausgerichteter ausgewählter Dateneinheiten nach Weiterleitung der jeweils ersten Dateneinheit zu Beginn einer neuen Befehlsfolge aufweisen.

**Revendications**

1. Procédé pour accélérer la mise à disposition d'une instruction dans le registre d'instructions (IR) d'un processeur commandé par micoprogramme, selon lequel au moins les unités de donnés, de longueur constante, constante les différentes instructions, sont amenées par blocs depuis une mémoire de travail à une mémoire intermédiaire (CACHE) et, à partir de celle-ci, par groupes, en fonction de la progression du programme en cours, à un tambon d'instructions (IB), à partir duquel les instructions sont ensuite appelées individuellement, l'une après l'autre, et sont transférées à l'état cadré à gauche au registre d'instructions (IR) en vue de l'interprétation, caractérisé en ce que

- à l'instruction de lecture (RI ou RIE) déclenchée, lorsque le tampon d'instructions (IB) a été remis à l'état de départ ou en cas de branchements de programme par suite d'une instruction de saut pour laquelle la condition de saut est remplie, la première nouvelle instruction est envoyée directement au registre d'instructions (IR) par la mémoire intermédiaire (CACHE), indépendamment du début de l'instruction à l'intérieur d'une unité de données et sous forme d'une unité de données cadrée à gauche,
- simultanément, et parallèlement à ce transfert, l'unité de données cadrée, fournie par la mémoire intermédiaire (CACHE), est envoyée au tambon d'instructions (IB) à travers un décadreur (IBAL), de manière que l'unité de données mémorisée dans le tampon d'instructions corresponde, quant à la position des octets valables, à l'unité de données dans la mémoire intermédiaire (CACHE), et
- ensuite, les unités de données appartenant au même groupe et également les unités de données nécessaires pour refaire de façon cyclique le remplissage, sont transférées à l'état inchangé de la mémoire intermédiaire (CACHE) au tampon d'instructions (IB).

2. Procédé selon la revendication 1, caractérisé en ce que, à chaque instruction de lecture (RI, RIE ou RIH) du processeur à la mémoire intermédiaire (CACHE), delle-ci met à disposition, simultanément, deux unités de données consécutives, lesquelles sont transférées l'une après l'autre avec un intervalle de temps au tampon d'instructions (IB) à l'intérieur de même cycle élémentaire (EOZ), le cadrage nécessaire de la première unité de données étant commandé au début de chaque nouvelle séquence d'instructions en fonction de l'instruction de lecture (par exemple RIE) reçue.

3. Dispositif pour accélérer la mise à disposition d'une instruction dans le registre d'instructions (IR) d'un processeur commandé par microprogramme, caractérisé par

- une mémoire intermédiaire (CACHE) permettant la sélection simultanée de deux unités de données consécutives,
- un premier commutateur-sélecteur (IALC) prévu à la sortie de lecture de la mémoire intermédiaire (CACHE) pour la sélection en fonction de l'adresse er le cadrage à gauche d'une suite de sections d'unités de données de même grandeur (de demi-mots par exemple), suite ayant l'étendue d'une unité de données (DW), à partir des deux unités de données lues simultanément,

– une voie de transmission directe raccordée à la sortie du premier commutateur-sélecteur (IALC) et menant au registre d'instructions (IR),
– un deuxième commutateur-sélecteur (IBAL) prévu à l'entrée du registre (IBA1 ou IBB1) d'un tampon d'instructions (IB), registre qui reçoit la première unité de données d'un groupe, en vue de décadrage de l'unité de données cadrée mise à disposition au premier commutateur-sélecteur (IALC),
– un commutateur-sélecteur (IALA par exemple) relié aux sorties de tous les registres (IBA1 à IBA4 par exemple) du tampon d'instructions (IB) utilisé pour une séquence d'instructions, en vue de la sélection de l'instruction suivante pour le registre d'instructions (IR), et
– des dispositifs de commande (C–ST et IB–ST) pour produire les différents impulsions de commande destinées à provoquer la commutation en temps voulu des commutateurs-sélecteurs et des voies de transmission.

4. Dispositif selon la revendication 3, caractérisé en ce que les dispositifs de commande (C–ST et IB–ST) comportent des dispositifs servant à l'exploitation des instructions de lecture déterminantes (RI, RIE ou RIH) et qui sont couplés à des dispositifs destinés à produire par dérivation les impulsions d'acceptation (CL–IB et CL–IR) pour les différents registres (par exemple IBA1 à IBA4) du tampon d'instructions et pour le registre d'instructions (IR), en fonction des impulsions de rythme (CL1 à CL4 par exemple) définissant les cycles élémentaires (EOZ), ainsi qu'à des dispositifs destinés à produire par dérivation, en temps voulu, les informations de positionnement pour les deux premiers commutateurs-sélecteurs (IALC et IBAL) en fonction des bits d'adresse déterminants de l'adresse d'instruction (AD), en liaison avec les impulsions de rythme (CL1 à CL4).

5. Dispositif selon la revendication 4, caractérisé en ce que les dispositifs destinés à produire en temps voulu, par dérivation, les informations de positionnement pour le premier commutateur-sélecteur (IALC), comprennent des dispositifs pour changer les bits d'adresse déterminants en vue de la retransmission d'unités de données non cadrées sélectées, à la suite de la retransmission de la première unité de donnés au début d'une nouvelle séquence d'instructions.

**Claims**

1. Method for accelerating the preparation of an instruction in the instructionregister (IR) of a microprogram-controlled processor in which at least the data units of constant length containing the various instructions are fed in blocks from a working memory to a buffer memory (CACHE) and from this are then fed in groups corresponding to the respective progress of the program to an instruction buffer (IB), from which the instructions are then successively retrieved one by one and each transferred with left justification to the instruction register (IR) for interpretation, characterized
– in that each first new instruction, independently of the beginning of the instruction, is fed within a data unit from the buffer memory (CACHE) with left justification as data unit directly to the instruction register (IR) with the read instruction (RI or RIE) triggered in the event of a reset instruction buffer (IB) or in the event of program branchings as a result of a jump instruction with a fulfilled jump condition,
– in that at the same time parallel to this the aligned data unit delivered by the buffer memory (CACHE) is fed via a realigner (IBAL) to the instruction buffer (IB) so that a data unit corresponding to the data unit in the buffer memory (CACHE) with respect to the position of the valid bytes is stored in the instruction buffer, and
– in that the data units belonging to the same group and also those required for cyclical refilling are then transferred unchanged from the buffer memory (CACHE) into the instruction buffer (IB).

2. Method according to Claim 1, characterized in that, with each read instruction (RI, RIE or RIH) of the processor to the buffer memory (CACHE), in each case, two successive data units are prepared by the buffer memory (CACHE) at the same time and within the same elementary cycle (EOZ) are transferred at time intervals one after another to the instruction buffer (IB), the necessary alignment of the first data unit in each case being controlled in dependence on the particular read instruction (e.g. RIE) at the beginning of each new instruction sequence.

3. Arrangement for accelerating the preparation of an instruction in the instruction register (IR) of a microprogram-controlled processor characterized by
– a buffer memory (CACHE) with simultaneous selection of two successive data units,
– a first selection switch (IALC) at the read output of the buffer memory (CACHE) for performing address-dependant selection and left-justified alignment of a sequence of data unit sections of equal size (e.g. halfwords) within the length of one data unit (DW) from the two simultaneously read data units,
– a direct transmission path to the instruction register (IR) connected to the output of the first selection switch (IALC),
– a second selection switch (IBAL) at the input of the registers (IBA1 or IBB1) of an instruction buffer (IB) which in each case accept the first data unit of a group for realigning the data unit made available, in each case at the first selection switch (IALC),
– a selection switch (e.g. IALA) connected to the outputs of all the registers (e.g. IBA1 to IBA4) of the instruction buffer (IB) used for an instruction sequence for selecting the next instruction, in each case, for the instruction register (IR) and
– controllers (C–ST or IB–ST) for producing the individual control pulses for switching over the selection switches and the transmission paths at the correct times.

4. Arrangement according to Claim 3, characterized in that the controllers (C–ST or IB–ST) exhibit devices for evaluating the decisive read instructions (RI, RIE or RIH) which are connected to devices for deriving the transfer pulses (CL–IB or CL–IR) for the individual instruction buffer registers (e.g. IBA1 to IBA4) and for the instruction register (IR) depending on the clock pulses (e.g. CL1 to CL4) which form the elementary cycles (EOZ) and also connected to devices for deriving at the correct time the setting information for the first two selection switches (IALC and IBAL) depending on the decisive address bits of the instruction address (AD) in conjunction with the clock pulses (CL1 to CL4).

5. Arrangement according to Claim 4, characterized in that the devices for deriving at the correct time the setting information for the first selection switch (IALC) exhibit devices for changing the decisive address bits for the purpose of passing on unaligned selected data units after passing on the first data unit in each case at the beginning of a new instruction sequence.

FIG 1

EP 0 243 879 B1

# FIG 2

AD

CACHE

| Ø | 1 | 2 | 3 | 4 | 5 | 6 | 7 | 8 | 9 | A | B | C | D | E | F |
|---|---|---|---|---|---|---|---|---|---|---|---|---|---|---|---|
| G | H | I | J | K | L | M | N | O | P | Q | R | S | T | U | V |

RIH
4. DW    O P Q R S T U V    →    | O P Q R S T U V |    IBA 4
3. DW    G H I J K L M N    →    | G H I J K L M N |    IBA 3

RIE
2. DW    8 9 A B C D E F    →    | 8 9 A B C D E F |    IBA 2
1. DW    6 7 8 9 A B C D    →    | × × × × × × 6 7 |    IBA 1

IR:    | 6 7 8 9 A B C D |

# FIG 3

EP 0 243 879 B1